(19) **Europäisches Patentamt**
**European Patent Office**
**Office européen des brevets**

(11) **EP 4 142 210 A1**

(12) **EUROPEAN PATENT APPLICATION**
published in accordance with Art. 153(4) EPC

(43) Date of publication:
**01.03.2023 Bulletin 2023/09**

(21) Application number: **21792719.3**

(22) Date of filing: **19.04.2021**

(51) International Patent Classification (IPC):
**H04L 9/32** (2006.01)

(52) Cooperative Patent Classification (CPC):
**H04L 9/32**

(86) International application number:
**PCT/JP2021/015890**

(87) International publication number:
**WO 2021/215401 (28.10.2021 Gazette 2021/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2020 US 202063014963 P**

(71) Applicant: **Panasonic Intellectual Property Corporation
of America
Torrance, CA 90504 (US)**

(72) Inventors:
- **TAGUCHI, Masahiro**
 **Osaka-shi, Osaka 540-6207 (JP)**
- **UNAGAMI, Yuji**
 **Osaka-shi, Osaka 540-6207 (JP)**
- **HIROSE, Yuuki**
 **Osaka-shi, Osaka 540-6207 (JP)**
- **FUCHIKAMI, Tetsuji**
 **Osaka-shi, Osaka 540-6207 (JP)**

(74) Representative: **Novagraaf International SA
Chemin de l'Echo 3
1213 Onex, Geneva (CH)**

(54) **CONTROL METHOD, CONTROL DEVICE, AND PROGRAM**

(57) A control method executed by a first device among a plurality of devices that are included in a distributed ledger system, the plurality of devices holding a distributed ledger, the control method including: (S1) receiving, from a second device among the plurality of devices, second identification information of the second device through short-range wireless communication, the second device being different from the first device; (S2) generating a block that includes transaction data selected from a transaction pool of the first device, the second identification information, and first identification information of the first device; and (S3) executing storing processing of storing the block generated in the distributed ledger held by the plurality of devices.

FIG. 8

```
          Start
            │
            ▼                    S1
┌──────────────────────────┐
│ Receive identification   │
│ information through      │
│ short-range wireless     │
│ communication            │
└──────────────────────────┘
            │
            ▼                    S2
┌──────────────────────────┐
│ Generate block           │
└──────────────────────────┘
            │
            ▼                    S3
┌──────────────────────────┐
│ Execute storing          │
│ processing               │
└──────────────────────────┘
            │
            ▼
           End
```

EP 4 142 210 A1

**Description**

[Technical Field]

The present invention relates to a control method, a control device, and a program.

[Background Art]

In distributed ledger technology (for example, blockchain technology), methods are used to control authentication performed when generating a block such as Proof of Work (hereinafter referred to as "PoW") and Proof of Stake (hereinafter referred to as "PoS") (see, for example, Non Patent Literatures 1 and 2 (NPLs 1 and 2)).

[Citation List]

[Non Patent Literature]

[NPL 1]
Satoshi Nakamoto, "Bitcoin: A Peer-to-Peer Electronic Cash System", [online], 2008, Retrieved on April 1, 2021, from the Internet <URL:https://bitcoin.org/bitcoin.pdf>
[NPL 2]
Sunny King, Scott Nadal, "PP Coin: Peer-to-Peer Crypto-Currency with Proof-of-Stake", [online], 2012, Retrieved on April 1, 2021, from the Internet <URL:https://decred.org/research/king2012.pdf>

[Summary of Invention]

[Technical Problem]

However, in the case where a method such as PoW or PoS is used, a problem arises in that the amount of processing required for distributed-ledger processing executed by devices varies from device to device.
To address this, the present invention provides a control method and the like, with which variation in the amount of processing between devices in a distributed ledger system is suppressed.

[Solution to Problem]

A control method according to one aspect of the present invention is a control method executed by a first device among a plurality of devices that are included in a distributed ledger system, the plurality of devices holding a distributed ledger, the control method including: receiving, from a second device among the plurality of devices, second identification information of the second device through short-range wireless communication, the second device being different from the first device; generating a block that includes transaction data selected from a transaction pool of the first device, the second identification information, and first identification information of the first device; and executing storing processing of storing the block generated in the distributed ledger held by the plurality of devices.
General and specific aspects disclosed above may be implemented using a system, a device, an integrated circuit, a computer program, or a computer-readable recording medium such as a CD-ROM, or any combination of systems, devices, integrated circuits, computer programs, or computer-readable recording media.

[Advantageous Effects of Invention]

According to the present invention, it is possible to suppress variation in the amount of processing between devices in a distributed ledger system.

[Brief Description of Drawings]

[FIG. 1]

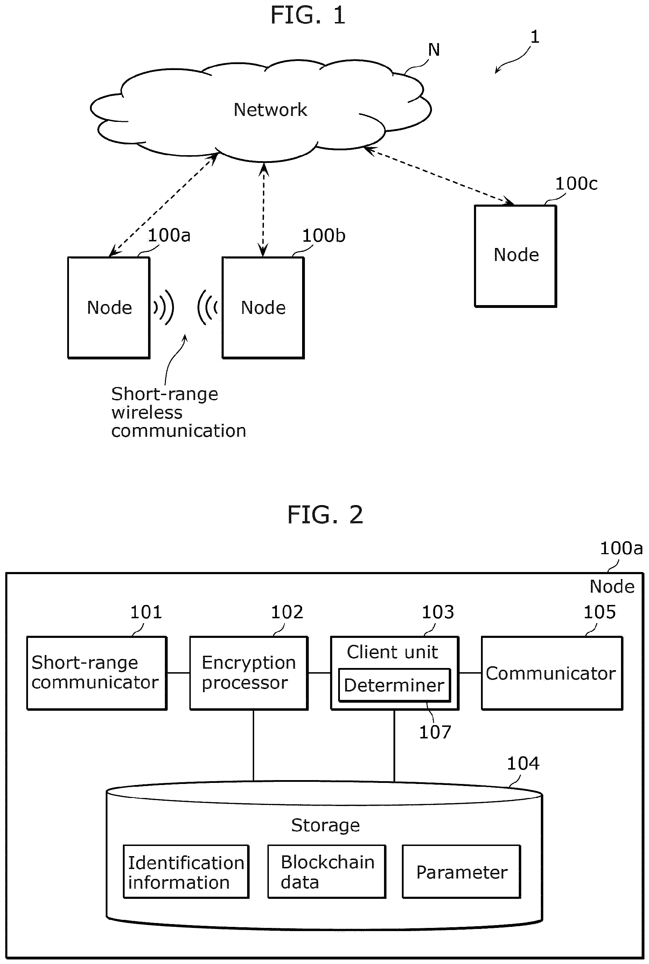

FIG. 1 is an illustrative diagram showing an overall configuration of a blockchain system according to Embodiment 1.

[FIG. 2]

FIG. 2 is an illustrative diagram showing a functional configuration of a node according to Embodiment 1.

[FIG. 3]

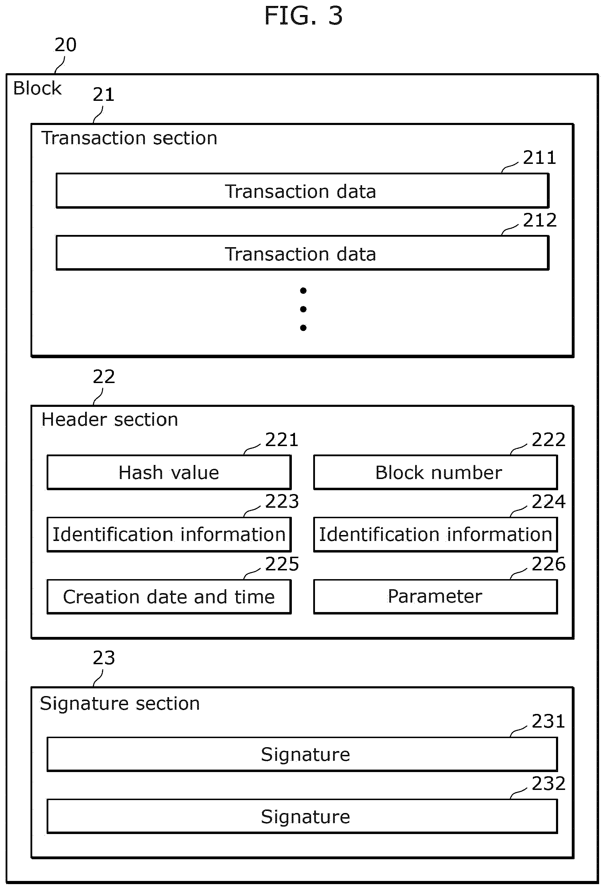

FIG. 3 is an illustrative diagram showing a data structure of a block according to Embodiment 1.

[FIG. 4]

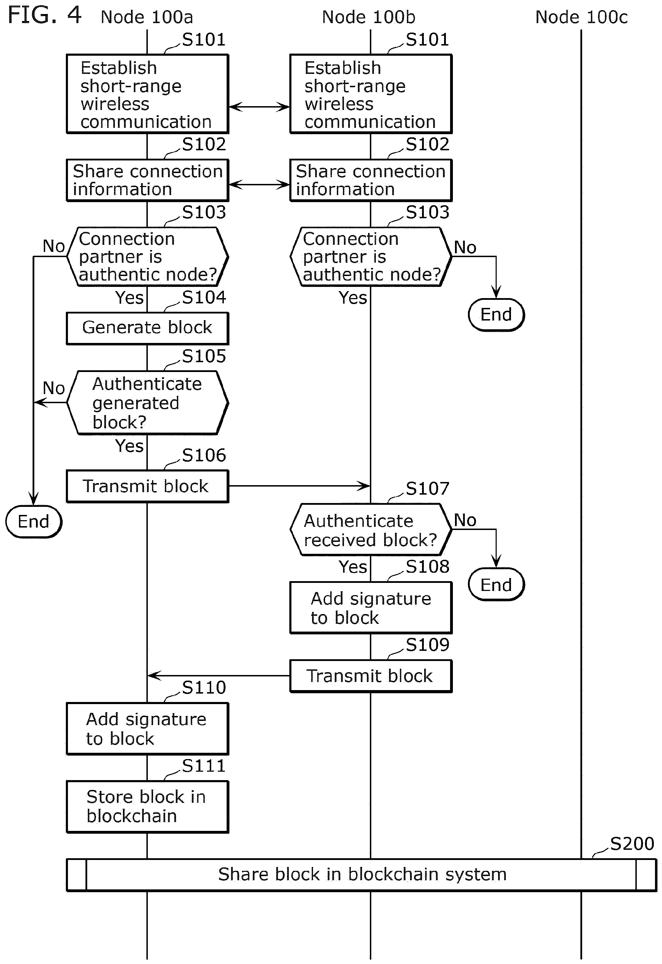

FIG. 4 is a sequence diagram showing processing of generating and storing a block according to Embodiment 1.

[FIG. 5]

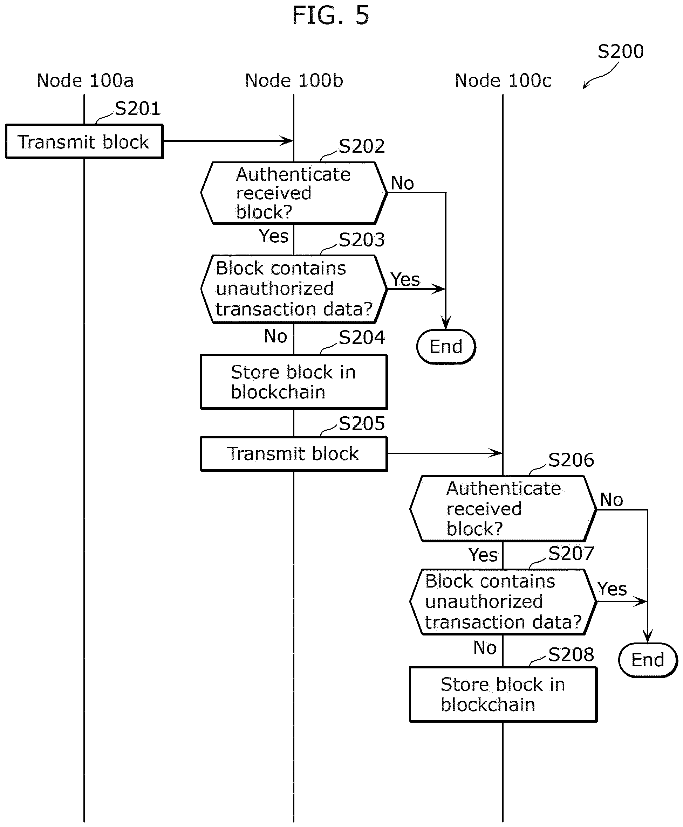

FIG. 5 is a sequence diagram showing processing of sharing and storing a block according to Embodiment 1.

[FIG. 6]

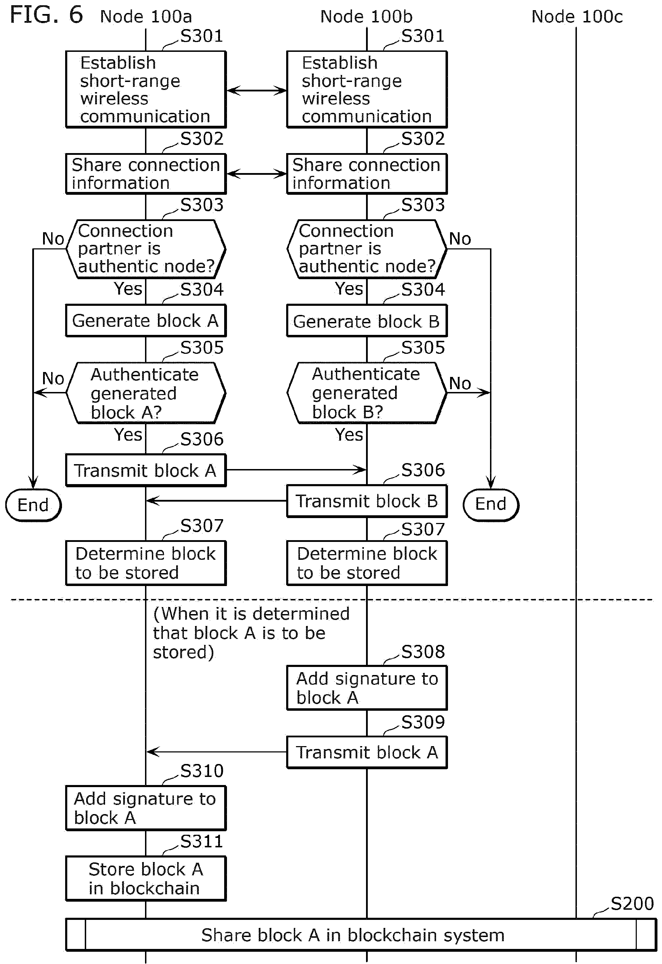

FIG. 6 is a flow diagram showing processing of generating and storing a block according to Embodiment 2.

[FIG. 7]

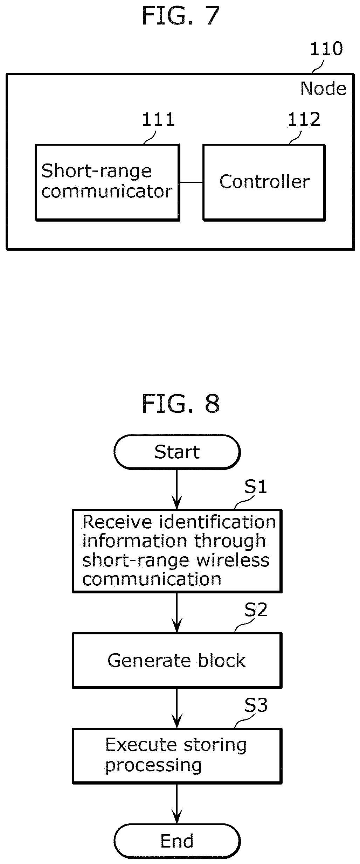

FIG. 7 is an illustrative diagram showing a functional configuration of a control device according to a variation.

[FIG. 8]

FIG. 8 is a flow diagram showing a control method according to a variation.

[Description of Embodiments]

The inventors of the invention of the present application found that the blockchain technology described in "background" section has the following problem.

In the distributed ledger technology (for example, blockchain technology), PoW, PoS, and the like are used as the methods for controlling authentication performed when generating a block.

PoW controls block authentication based on the computation processing performance of devices (also referred to as nodes) that participate in a blockchain. PoS controls block authentication based on the amount of currency held in a blockchain.

However, PoW is problematic in that nodes are required to perform an enormous amount of computation processing to authenticate a block, which requires hardware resources or electric power to execute the enormous amount of computation processing, resulting in an increase in cost. In addition, there is another problem in that the right to authenticate a block is concentrated on a node or a group of nodes having a relatively high computation processing performance, as a result of which, the amount of processing varies between nodes, and thus the persistence and fairness of the blockchain cannot be maintained.

On the other hand, with PoS, the right to authenticate a block is determined based on the amount of virtual currency held by nodes. With this configuration, the above-described problem encountered with PoW can be solved without requiring a high-performance calculator.

However, with PoS, the right to authenticate a block is concentrated on a node that holds a relatively large amount of virtual currency, as a result of which, the amount of processing varies from node to node, and thus a problem may arise in that it is not possible to maintain the persistence and fairness of the blockchain. Also, another problem may arise in that the currency liquidity decreases, or in other words, it causes currency oligopoly.

As described above, there is a problem in that, in a distributed ledger system, the amount of processing required for distributed-ledger processing executed by nodes (devices) varies from device to device. If the amount of processing varies from device to device, the operation of maintaining and updating the distributed ledger may not be performed appropriately.

To address this, the present invention provides a control method and the like, with which variation in the amount of processing between devices in a distributed ledger system is suppressed. This may contribute to an appropriate operation of the distributed ledger system.

It can also be said that the present invention provides a control method and the like, with which variation in the voting right between devices in a distributed ledger system can be suppressed. That is, the phrase "variation in the amount of processing between devices" as used in the specification of the present application can be rephrased to "variation in the voting right between devices in a distributed ledger system". As used herein, the voting right means the right to vote for the system. The control method provided by the present invention can suppress variation in the right to vote for the system caused by a dependency on inequality in the amount of processing in PoW or inequality in the amount of virtual currency in PoS.

In order to solve the problem described above, a control method according to one aspect of the present invention is a control method executed by a first device among a plurality of devices that are included in a distributed ledger system, the plurality of devices holding a distributed ledger, the control method including: receiving, from a second device among the plurality of devices, second identification information of the second device through short-range wireless communication, the second device being different from the first device; generating a block that includes transaction data selected from a transaction pool of the first device, the second identification information, and first identification information of the first device; and executing storing processing of storing the block generated in the distributed ledger held by the plurality of devices.

According to the aspect described above, among the plurality of devices that constitute the distributed ledger system, two devices that physically come close to each other, or in other words, two devices that have established short-range wireless communication execute block storing processing based on the fact that the short-range wireless communication has been established between the two devices. Situations in which two devices come close to each other within a distance where short-range wireless communication is possible can occur relatively often, and thus the speed of block authentication can be maintained without reducing the same. Also, the two devices that establish short-range wireless communication may be evenly selected from among a plurality of nodes that constitute the distributed ledger system. Accordingly, with the control method described above, variation in the amount of processing between devices in the distributed ledger system can be suppressed.

Also, the control method described above does not require an enormous amount of computation processing as performed in PoW. Accordingly, hardware resources or electric power for executing the enormous amount of computation processing is unnecessary, and thus an increase in cost can be suppressed. For this reason, even a computer with a relatively low computation ability (for example, a smartphone or a personal computer) can perform block authentication. This can suppress the currency oligopoly, or in other words, can contribute to increasing the currency liquidity. Also, with the control method described above, the concentration of the right to authenticate a block according to the amount of currency held, which occurs in PoS, does not occur, and thus variation in the amount of processing between devices can be suppressed.

As described above, in the control method according to the present invention, the block authentication performed when generating a block is controlled based on the physical proximity between devices, without depending on the calculator's computation performance or the amount of currency held. Accordingly, it is possible to implement a distributed ledger system that does not depend on the calculator's computation performance or the amount of currency held while maintaining the tamper resistance and the reliability of the distributed ledger technology.

For example, in the storing processing, the block generated may be stored in the distributed ledger at a higher probability as a total number of blocks generated based on near-field wireless communication established between the first device and the second device out of blocks stored in the distributed ledger is smaller.

According to the aspect described above, the block generated based on the near-field wireless communication established between two devices whose total number of blocks generated based on near-field wireless communication in the past is smaller may be stored in the distributed ledger at a higher probability. For this reason, a situation is suppressed from occurring in which only a small number of specific devices are concentratedly involved in the block generation. Accordingly, variation in the amount of processing between devices in the distributed ledger system can be suppressed.

For example, in the storing processing, the block generated may be stored in the distributed ledger when the total number of blocks generated based on near-field wireless communication established between the first device and the second device out of blocks stored in the distributed ledger is less than or equal to a predetermined number.

According to the aspect described above, the block generated based on the near-field wireless communication established between two devices whose total number of blocks generated based on near-field wireless communication in the past is less than or equal to a predetermined number may be stored in the distributed ledger. For this reason, a situation is more appropriately suppressed from occurring in which only a small number of specific devices are concentratedly involved in the block generation. Accordingly, variation in the amount of processing between devices in the distributed ledger system can be more appropriately suppressed.

For example, in the storing processing, the block generated may be stored in the distributed ledger at a higher probability as a total number of blocks generated based on near-field wireless communication established between the first device and the second device out of a predetermined number of most recent blocks of blocks stored in the distributed ledger is smaller.

According to the aspect described above, the block generated based on the near-field wireless communication established between two devices whose total number of blocks generated based on near-field wireless communication during a predetermined period whose end is the present time is smaller may be stored in the distributed ledger at a higher probability. For this reason, a situation is more appropriately suppressed from occurring in which only a small number of specific devices are concentratedly involved in the block generation. Accordingly, variation in the amount of processing between devices in the distributed ledger system can be more appropriately suppressed.

For example, in the storing processing, the block generated may be stored in the distributed ledger when a total number of blocks generated based on near-field wireless communication established between the first device and the second device out of a predetermined number of most recent blocks of blocks stored in the distributed ledger is less than or equal to a predetermined number.

According to the aspect described above, the block generated based on the near-field wireless communication established between two devices whose total number of blocks generated based on near-field wireless communication during a predetermined period whose end is the present time is less than or equal to a predetermined number may be stored in the distributed ledger. For this reason, a situation is more appropriately suppressed from occurring in which only a small number of specific devices are concentratedly involved in the block generation. Accordingly, variation in the amount of processing between devices in the distributed ledger system can be more appropriately suppressed.

For example, in the storing processing, the block generated may be prohibited from being stored in the distributed ledger when a most recent one of blocks stored in the distributed ledger is a block that was generated based on near-field wireless communication established between the first device and the second device.

According to the aspect described above, the block generated based on the near-field wireless communication established between two devices that generated the previous block based on the near-field wireless communication immediately before the present time is prohibited from being stored in the distributed ledger. For this reason, a situation is suppressed from occurring in which two specific devices consecutively store blocks in the distributed ledger. Accordingly, variation in the amount of processing between devices in the distributed ledger system can be suppressed.

For example, in the storing processing, when the block generated is to be stored in the distributed ledger, the block generated may be transmitted to the plurality of devices to be stored in the distributed ledger held by the plurality of devices, and when the block generated is not to be stored in the distributed ledger, the block generated may not be transmitted to the plurality of devices.

According to the aspect described above, by performing control to determine whether to transmit the generated block to the plurality of devices, it is possible to more easily perform control to determine whether to store the block in the distributed ledger. Accordingly, variation in the amount of processing between devices in the distributed ledger system can be more easily suppressed.

For example, in the storing processing, when the block generated is to be stored in the distributed ledger, the block generated may be transmitted to the second device to cause the second device to add a digital signature of the second device to the block transmitted, the block to which the digital signature of the second device has been added may be received, a digital signature of the first device may be added to the block received, and the block to which the digital signatures of the first device and the second device have been added may be stored in the distributed ledger held by the plurality of devices.

According to the aspect described above, the digital signatures of the two devices that established near-field wireless communication are added to the generated block, and the block is stored in the distributed ledger. With this configuration, it is clear that the block was certainly generated based on the near-field wireless communication established between the two devices, and this fact can be verified later. Accordingly, with the control method described above, variation in the amount of processing between devices in the distributed ledger system can be suppressed while making clear the devices involved in the generation of the block.

For example, the second identification information may include authentication information generated by using a secret key of the second device. When the second identification information is received, the authentication information included in the second identification information may be verified by using a public key of the second device, and the block is generated only when the authentication information included in the second identification information is successfully verified.

According to the aspect described above, the block may be generated based on the fact that the first device has come close to the second device that has been verified as an authentic device of the distributed ledger system. Accordingly, with the control method described above, variation in the amount of processing between devices in the distributed ledger system can be more appropriately suppressed by using the near-field wireless communication established with the authentic device.

Also, in order to solve the problem described above, a control device according to one aspect of the present invention is a control device that is a first device among a plurality of devices that are included in a distributed ledger system, the plurality of devices holding a distributed ledger, the control device including: a short-range communicator that receives, from a second device among the plurality of devices that is different from the first device, second identification information of the second device through short-range wireless communication; and a controller (a) generates a block that includes transaction data selected from a transaction pool of the first device, the second identification information, and first identification information of the first device and (b) executes storing processing of storing the block generated in the distributed ledger held by the plurality of devices.

According to the aspect described above, the same advantageous effects as those of the above-described control method can be obtained.

Also, in order to solve the problem described above, a program according to one aspect of the present invention is a program for causing a computer to execute the control method described above.

According to the aspect described above, the same advantageous effects as those of the above-described control method can be obtained.

General and specific aspects disclosed above may be implemented using a system, a device, an integrated circuit, a computer program, or a computer-readable recording medium such as a CD-ROM, or any combination of systems, devices, integrated circuits, computer programs, or computer-readable recording media.

Embodiments will be described below in detail with reference to the drawings.

The embodiments described below show general or specific examples of the present invention. The numerical values, shapes, materials, structural elements, the arrangement and connection of the structural elements, steps, the order of the steps, and the like shown in the following embodiments are merely examples, and therefore are not intended to limit the scope of the present invention. Also, among the structural elements described in the following embodiments, structural elements not recited in any one of the independent claims are described as arbitrary structural elements.

[Embodiment 1]

In the present embodiment, a control method for controlling nodes that constitute blockchain system 1, with which variation in the amount of processing between devices in the distributed ledger system is suppressed, will be described.

1. System Configuration

Here, an example will be described in which a new block is stored in a blockchain based on the fact that two nodes that belong to blockchain system 1 have passed by each other.

Hereinafter, blockchain system 1 that is an example of a distributed ledger system will be described. As the distributed ledger, it is also possible to use another type of distributed ledger (for example, IOTA, Hashgraph, or the like) that is different from the blockchain.

1.1 Overall Configuration of System

FIG. 1 is an illustrative diagram showing an overall configuration of blockchain system 1 according to the present embodiment. Blockchain system 1 includes node 100a, 100b, and 100c (hereinafter also referred to as "nodes 100a and the like"). Nodes 100a and the like are blockchain nodes that constitute blockchain system 1. Nodes 100a and the like are implemented by computer devices, and more specifically, personal computers, smartphones, tablets, or the like.

Nodes 100a and the like are connected to be capable of communicating with each other via network N. Also, node 100a and node 100b may be connected to be capable of communicating with each other through short-range wireless communication. For example, node 100a and node 100b are carried by different users, and node 100a and node 100b are connected through near-field wireless communication when the user of node 100a and the user of node 100b pass by each other. The following description will be given based on this case. Node 100a corresponds to a first device, and node 100b corresponds to a second device.

Blockchain system 1 may or may not include network N.

Nodes 100a and the like have the same hardware configuration and the same functional configuration. Nodes 100a and the like operate independently of each other.

1.2 Configuration of Node

FIG. 2 is an illustrative diagram showing a functional configuration of node 100a as a representative of nodes 100a and the like of the present embodiment.

As shown in FIG. 2, node 100a includes functional units such as short-range communicator 101, encryption processor 102, client unit 103, storage 104, and communicator 105. Client unit 103 includes determiner 107. The functional units of node 100a are implemented by a processor (for example, a CPU (Central Processing Unit)) (not shown) included in node 100a executing a predetermined program using a memory (not shown).

Short-range communicator 101 is a functional unit that performs short-range wireless communication, and includes a communication interface for performing near-field wireless communication. The near-field wireless communication is, for example, near-field wireless communication that conforms to the Bluetooth (registered trademark) standard.

When node 100a comes close to another node, or in other words, the distance between node 100a and the other node is within a range where they can establish short-range wireless communication, short-range communicator 101 establishes short-range wireless communication with short-range communicator 101 of the other node and exchanges connection information. The expression "node 100a comes close to another node" corresponds to the expression "node 100a and another node pass by each other". In general, the short-range communication described above may also be referred to as "pass-by communication".

The connection information includes identification information for uniquely identifying a node, key information for connecting to blockchain system 1, and the like. The identification information includes authentication information generated using a secret key of the node.

For example, when node 100a and node 100b pass by each other, short-range communicator 101 of node 100a receives, from node 100b, the connection information of node 100b.

Encryption processor 102 is a processor that decrypts information received by short-range communicator 101, and encrypts information to be transmitted by short-range communicator 101. Encryption processor 102 verifies, based on the information received by short-range communicator 101 and decrypted by encryption processor 102, whether node 100b that is a connection partner is an authentic node to be connected to blockchain system 1. If it is verified that node 100b is an authentic node, encryption processor 102 maintains the near-field wireless communication established by short-range communicator 101. If it is verified that node 100b is not an authentic node, encryption processor 102 disconnects the near-field wireless communication.

The information decrypted or encrypted by encryption processor 102 includes connection information. As a result of the connection information being encrypted, it is possible to prevent intervention or wiretapping from devices external to blockchain system 1.

Client unit 103 is a functional unit that executes processing for causing node 100a to operate as a blockchain client. Client unit 103 performs operations such as generating blocks, authenticating blocks by using determiner 107, adjusting parameters of conditional expressions for block authentication, performing communication with other nodes by using communicator 105 (including, for example, reception and transmission of block information), and performing control to write and read data with respect to storage 104. Client unit 103 stores authenticated blocks into the blockchain, but does not store not-authenticated blocks into the blockchain.

Determiner 107 is a functional unit that determines whether to authenticate a block. Determiner 107 determines whether to authenticate a block by taking, into consideration, combinations of nodes (also referred to as "node pairs") that generated authenticated blocks that have already been shared in blockchain system 1 by using predetermined conditional expressions.

More specifically, client unit 103 generates a block that includes one or more transaction data items selected from a transaction pool of node 100a, the identification information of node 100b, and the identification information of node 100a. Then, client unit 103 executes storing processing of storing the generated block in the distributed ledger held by nodes 100a and the like. In the storing processing, control is performed to determine whether to store the block in the blockchain based on the result of determination made by determiner 107 as to whether to authenticate the generated block.

In the storing processing, the generated block may be stored in the blockchain at a higher probability as the total number of blocks generated based on the near-field wireless communication established between node 100a and node 100b out of the blocks stored in the blockchain is smaller.

Also, in the storing processing, the generated block may be stored in the blockchain when the total number of blocks generated based on the near-field wireless communication established between node 100a and node 100b out of the blocks stored in the blockchain is less than or equal to a predetermined number.

Also, in the storing processing, the generated block may be stored in the blockchain at a higher probability as the total number of blocks generated based on the near-field wireless communication established between node 100a and node 100b out of a predetermined number of most recent blocks of the blocks stored in the blockchain is smaller.

Also, in the storing processing, the generated block may be stored in the blockchain when the total number of blocks generated based on the near-field wireless communication established between node 100a and node 100b out of a predetermined number of most recent blocks of the blocks stored in the blockchain is less than or equal to a predetermined number.

Also, in the storing processing, the generated block may be prohibited from being stored in the blockchain when a most recent one of the blocks stored in the blockchain is a block that was generated based on the near-field wireless communication established between node 100a and node 100b.

When client unit 103 receives the identification information included in the connection information of node 100b, client unit 103 may verify the authentication information included in the received identification information by using a public key of node 100b, and generate a block only when the authentication information included in the received identification information is successfully verified.

In the case where the generated block is stored in the distributed ledger in the storing processing, client unit 103 transmits the generated block to nodes 100b and 100c via communicator 105 to store the generated block in the distributed ledger held by nodes 100b and 100c. In the case where the generated block is not stored in the distributed ledger, client unit 103 does not transmit the generated block to nodes 100b and 100c.

Storage 104 is a functional unit that stores various types of information, and includes a storage device. Storage 104 stores information used in the processing operations performed by encryption processor 102 and client unit 103. Storage 104 stores, for example, the identification information of other nodes, blockchain data, and parameters ($\alpha$, $\beta$, and the like) of conditional expressions for block authentication, which will be described later. The parameters are values shared between the nodes included in blockchain system 1.

Communicator 105 is a functional unit that connects to network N so as to be capable of performing communication, and includes a communication interface. Communicator 105 includes, for example, a communication interface for connecting to a cellphone carrier access network, or a communication interface for connecting to a wireless LAN (Local Area Network) such as WiFi (registered trademark). Communicator 105 may include a communication interface for connecting to a wired network such as the Ethernet.

1.3 Data Structure of Block

Next, a data structure of a block will be described.

FIG. 3 is an illustrative diagram showing a data structure of block 20 according to the present embodiment. Block 20 is generated by client unit 103.

As shown in FIG. 3, block 20 includes transaction section 21, header section 22, and signature section 23.

Transaction section 21 includes one or more transaction data items (for example, transaction data 211, transaction data 212, and so on). The one or more transaction data items included in transaction section 21 are data items that include information regarding the transaction generated in blockchain system 1 and have been selected from the transaction pool of node 100a.

Header section 22 includes hash value 221, block number 222, identification information 223, identification information 224, creation date and time 225, and parameter 226.

Hash value 221 is a hash value of a block immediately preceding the block in the blockchain obtained through calculation using a predetermined hash function.

Block number 222 is a block number assigned to the block in the blockchain.

Identification information 223 is identification information of one of the two nodes involved in the generation of the block.

Identification information 224 is identification information of the other one of the two nodes involved in the generation of the block.

Creation date and time 225 is information indicating the date and time when the block was generated.

Parameter 226 includes parameters $\alpha$ and $\beta$.

Signature section 23 includes signatures 231 and 232 that are digital signatures of the two nodes involved in the generation of the block. In the case where block 20 is a block generated based on the pass-by communication established between node 100a and node 100b, signatures 231 and 232 include signatures of node 100a and node 100b. In the specification of the present application, when the term "signature" is used alone, it means a digital signature. The same applies hereinafter.

1.4 Block Authentication Condition

Hereinafter, conditions used by client unit 103 (more specifically, determiner 107) to authenticate a block will be described.

As described above, client unit 103 stores the generated block in the blockchain at a higher probability as the total number of blocks generated based on the near-field wireless communication established between node 100a and node 100b out of the blocks stored in the blockchain is smaller.

In order to implement the processing, client unit 103 authenticates the block if, for example, hash value H (100a, 100b) calculated by using a predetermined hash function is less than threshold value Th (Expression 1 shown below). Otherwise (Expression 2 shown below), client unit 103 does not authenticate the block.

$$H \ (100a, \ 100b) < Th \quad \cdots \ \text{Authenticated (Expression 1)}$$

$$H \ (100a, \ 100b) \geq Th \quad \cdots \ \text{Not authenticated (Expression 2)}$$

Hash value H (100a, 100b) is a value obtained by computing the identification information of node 100a and the identification information of node 100b by using a predetermined hash function.

Threshold value Th may be expressed as follows, for example.

[Math. 1]

$$\alpha \times \left(1 - \beta \cdot \frac{\mathrm{COUNT}\left(B_{i,j}\right)}{N}\right)$$

Here, a and β are parameters for controlling the probability of authenticating a block.

Parameter α consistently increases or decreases the probability of authenticating a block by consistently increasing or decreasing threshold value Th.

Parameter β increases or decreases the degree of contribution of the total number of appearances of the pair of two nodes involved in the generation of the blocks already present in the blockchain to threshold value Th.

N represents the total number of blocks included in the existing blockchain. COUNT ($B_{i,j}$) represents the total number of blocks generated by pass-by communication established between node i and node j out of the blocks included in the existing blockchain.

Threshold value Th will be described below by using a specific example.

In the configuration shown in FIG. 1, it is assumed that total number N of blocks included in the existing blockchain is 1, and the block was generated based on the pass-by communication established between node 100a and node 100b. An example of condition determination for generating and authenticating a second block in the blockchain in this case will be described.

For the sake of simplifying the description, it is assumed that the parameters used in threshold value Th are set such that α is 100.0, and β is 1.0. It is also assumed that hash value H (100a, 100b) obtained by computing the identification information of node 100a and the identification information of node 100b by using a hash function is 10. It is also assumed that hash value H (100a, 100c) obtained by computing the identification information of node 100a and the identification information of node 100c by using a hash function is 20.

First, in the case where a block is generated based on the pass-by communication established between node 100a and node 100b, threshold value Th can be expressed by 100.0 × (1 - 1.0 × 1 ÷ 1), or in other words, threshold value Th is 0. Because hash value H (100a, 100b) is 10, which is greater than 0 that is the result of the computation, client unit 103 does not authenticate the generated block (Expression 2 shown above).

Next, in the case where a block is generated based on the fact that node 100a and node 100c have passed by each other, threshold value Th can be expressed by 100.0 × (1 - 1.0 × 0 ÷ 1), or in other words, threshold value Th is 100. Because hash value H (100a, 100c) is 20, which is less than 100 that is the result of the computation, client unit 103 authenticates the generated block (Expression 1 shown above).

COUNT ($B_{i,j}$) may represent the total number of blocks generated based on the pass-by communication between node i and node j out of a predetermined number of most recent blocks of the blocks included in the existing blockchain. With this configuration, authentication of a new block is controlled by using only a predetermined number of most recent blocks, and thus variation in the amount of processing between devices in the distributed ledger system can be suppressed.

1.5 Processing of Generating, Sharing, and Storing Block

Hereinafter, processing of generating, sharing, and storing a block performed by nodes 100a and the like will be described.

FIG. 4 is a sequence diagram showing processing of generating and storing a block according to the present embodiment. In this example, the processing of generating a block based on pass-by communication established by node 100a and node 100b will be described.

As shown in FIG. 4, in step S101, short-range communicators 101 of nodes 100a and the like establish short-range communication with another node. For example, when node 100a and node 100b come close to each other within a communication distance where near-field wireless communication is possible, short-range communicator 101 of node 100a and short-range communicator 101 of node 100b establish short-range wireless communication. If short-range communication is established, the processing proceeds to step S102. Otherwise, short-range communicators 101 stand by in step S101 until short-range communication is established.

Node 100a may proceed to step S102 not only when short-range wireless communication is established, but also each time a predetermined length of time passes while short-range wireless communication is established.

In step S102, node 100a transmits the connection information of node 100a to node 100b that is a connection partner with which short-range wireless communication was established in step S101. Likewise, short-range communicator 101 of node 100b transmits the connection information of node 100b to node 100a, which is a connection partner, to share the connection information with node 100a. By doing so, the connection information of node 100a and the connection information of node 100b are shared between nodes 100a and 100b.

In step S103, node 100a determines, based on the connection information received in step S102, whether the connection partner (namely, node 100b) is an authentic node in blockchain system 1. If it is determined that the connection partner is an authentic node (Yes in step S103), node 100a proceeds to step S104. Otherwise (No in step S103), the series of processing shown in FIG. 4 ends. Node 100b also executes the same processing.

In step S104, client unit 103 of node 100a selects, from the transaction pool of node 100a, transaction data to be included in a block to be generated. Then, client unit 103 of node 100a generates a block that includes the selected transaction data, the hash value of the most recent block in the blockchain, the identification information of node 100a, the identification information of node 100b , and creation date and time. At this time, no signature is included in signature section 23 of the block to be generated.

In the selection of transaction data described above, for example, node 100a selects the transaction data based on the fee that can be obtained if the transaction data is authenticated. For example, client unit 103 may more preferentially select transaction data whose fee that can be obtained if the transaction data is authenticated is higher.

In step S105, client unit 103 of node 100a determines whether to authenticate the block generated in step S104. At this time, client unit 103 determines whether to authenticate the block by using at least the identification information of node 100a and the identification information of node 100b. If it is determined to authenticate the block (Yes in step S105), node 100a proceeds to step S106. Otherwise (No in step S105), the series of processing shown in FIG. 4 ends.

In step S106, client unit 103 of node 100a transmits the block generated in step S104 to node 100b so as to request node 100b to add a signature to the block. Node 100b receives the block transmitted from node 100a.

In step S107, node 100b determines, by using the identification information of the block received in step S106, whether to authenticate the block. If it is determined to authenticate the block (Yes in step S107), node 100b proceeds to step S108. Otherwise (No in step S107), the series of processing shown in FIG. 4 ends.

In step S108, node 100b adds a signature to signature section 23 of the block received in step S106.

In step S109, node 100b transmits, to node 100a, the block to which the signature was added in step S108. Node 100a receives the block transmitted from node 100b.

In step S110, node 100a adds a signature to signature section 23 of the block received in step S109.

In step S111, node 100a stores the block to which the signature was added in step S110 in the blockchain.

In step S200, node 100a broadcasts the block received in step S109 in blockchain system 1 to share the block in blockchain system 1. Details of the processing performed in step S200 will be described later.

1.6 Sharing Block

Processing of sharing a block between nodes 100a, 100b, and 100c will be described below.

FIG. 5 is a sequence diagram showing processing of sharing and storing a block according to the present embodiment. FIG. 5 shows processing of sharing a block generated by node 100a in blockchain system 1 by node 100a broadcasting the generated block in blockchain system 1 to transmit the generated block to node 100b and node 100c. The processing shown in FIG. 5 shows details of the processing performed in step S200 shown in FIG. 4.

In this example, it is assumed that node 100a and node 100b have been connected to each other, and node 100b and node 100c have been connected to each other on a P2P network of blockchain system 1.

In step S201, node 100a transmits, to node 100b, the block to which the signature was added in step S110. Node 100b receives the block transmitted from node 100a.

In step S202, node 100b determines whether to authenticate the block received in step S201. Specifically, node 100b determines whether the block satisfies a block authentication condition (Expression 1 shown above). If node 100b determines to authenticate the block, or in other words, if node 100b determines that the block satisfies the condition (Yes in step S202), node 100b proceeds to step S203. Otherwise (No in step S202), node 100b discards the block, and the series of processing shown in FIG. 5 ends.

In step S203, node 100b determines whether the block received in step S201 contains unauthorized transaction data. Whether the block contains unauthorized transaction data is determined by, for example, determining whether a plurality of transaction data items that show the same payment are to be included in the blockchain (or in other words, whether a double payment occurs). If it is determined that the block contains unauthorized transaction data (Yes in step S203), node 100b discards the block, and the series of processing shown in FIG. 5 ends. Otherwise (No in step S203), node 100b proceeds to step S204.

In step S204, node 100b stores the block received in step S201 in the blockchain.

In step S205, node 100b transmits the block received in step S201 to node 100c. Node 100c receives the block transmitted from node 100b.

In step S206, node 100c determines whether the block received in step S205 satisfies the block authentication condition (Expression 1 shown above). If it is determined to authenticate the block (Yes in step S206), node 100c proceeds to step S207. Otherwise (No in step S202), node 100c discards the block, and the series of processing shown in FIG. 5 ends.

In step S207, node 100c determines whether the block received in step S205 contains unauthorized transaction data. If it is determined that the block contains unauthorized transaction data (Yes in step S207), node 100c discards the block, and the series of processing shown in FIG. 5 ends. Otherwise (No in step S207), node 100c proceeds to step S208.

In step S208, node 100c stores the block received in step S205 in the blockchain.

1.7 Advantageous Effects of Embodiment 1

As shown in Embodiment 1, blockchain system 1 generates a block by using the fact that nodes pass by each other or come close to each other. It is thereby possible to generate a block without constantly performing computation by using a high-performance calculator. In this case, the block generation and the block authentication are controlled by using the frequency of appearance of a pair of nodes involved in the generation of the block. With this configuration, blockchain system 1 can suppress oligopoly or a reduction in liquidity.

(Embodiment 2)

2. System Configuration

In the present embodiment, a configuration different from that of Embodiment 1 will be described with respect to the control method for controlling nodes that constitute blockchain system 1, with which variation in the amount of processing between devices in the distributed ledger system is suppressed, and the like.

Specifically, in Embodiment 1, a configuration was described in which only one of nodes that belong to blockchain system 1 and have passed by each other generates a block. In the present embodiment, a configuration will be described in which each of the nodes that have passed by each other generates a block will be described. Hereinafter, differences between Embodiment 1 and Embodiment 2 will be mainly described.

2.1 Processing of Generating, Sharing, and Storing Block

Hereinafter, processing of generating, sharing, and storing a block performed by nodes 100a and the like will be described.

FIG. 6 is a flow diagram showing processing of generating and storing a block according to the present embodiment. Specifically, FIG. 6 illustrates processing of generating blocks performed by nodes 100a and node 100b based on the pass-by communication established between node 100a and node 100b.

Steps S301 to S303 are the same as steps S101 to S103 of Embodiment 1.

In step S304, client unit 103 of node 100a selects transaction data from the transaction pool of node 100a and generates a block (also referred to as block A) that includes the selected transaction data and the like, as in step S104 of Embodiment 1. Likewise, client unit 103 of node 100b selects transaction data from the transaction pool of node 100b and generates a block (also referred to as block B) that includes the selected transaction data and the like, as in step S104 of Embodiment 1. The transaction data items selected by nodes 100a and 100b may be different from each other.

In step S305, client unit 103 of node 100a determines whether to authenticate the block generated in step S304. At this time, client unit 103 determines whether to authenticate the block by using at least the identification information of node 100a and the identification information of node 100b. If it is determined to authenticate the block (Yes in step S305), node 100a proceeds to step S306. Otherwise (No in step S305), the series of processing shown in FIG. 6 ends. Likewise, client unit 103 of node 100b determines whether to authenticate the block generated in step S304. Parameters $\alpha$ and $\beta$ of the conditional expression (Expression 1 shown above) used by each of node 100a and node 100b to make the above-described determination may be different from each other.

In step S306, node 100a transmits, to node 100b, block A generated in step S304. Likewise, node 100b transmits, to node 100a, block B generated in step S304.

In step S307, node 100a determines which of block A generated in step S304 and block B received in step S306 is to be stored in the blockchain. Likewise, node 100b determines which of block B generated in step S304 and block A received in step S306 is to be stored in the blockchain. At this time, node 100a and node 100b determine which of the two blocks is to be stored in the blockchain based on a common criterion.

In step S307 of determining a block to be stored, the block may be determined based on the value of rewards. For example, a block whose value of rewards that can be obtained if the block is stored in the blockchain is higher may be determined as the block to be stored in the blockchain. Here, as an example, processing performed when block A generated by node 100a is determined as the block to be stored in the blockchain will be described.

In step S308, node 100b adds a signature to signature section 23 of block A received in step S306.

In step S309, node 100b transmits, to node 100a, block A to which the signature was added in step S308. Node 100a receives block A transmitted from node 100b.

In step S310, node 100a adds a signature to block A received in step S309.

In step S311, node 100a stores block A to which the signature was added in step S310 in the blockchain.

In step S200, node 100a broadcasts block A received in step S309 in blockchain system 1 to share block A in blockchain system 1. Step S200 is the same as step S200 of Embodiment 1.

2.2 Block Authentication Condition

In the present embodiment, threshold value Th may include a hash value of a block. For example, if parameter $\alpha$ includes a hash value of a block, the block authentication condition can be changed for each of the block that contains transaction data selected by node 100a and the block that contains transaction data selected by node 100b.

2.3 Advantageous Effects of Embodiment 2

With the blockchain of the system of Embodiment 2, in addition to the advantageous effects obtained by that of Embodiment 1, an attempt can be made to generate two blocks based on the fact that nodes have passed by each other only once, and thus the speed of transaction processing in the entire network is improved. Also, the possibility of obtaining rewards is increased by nodes authenticating blocks, and thus an advantageous effect that provides an incentive to cause nodes to participate in the network can be obtained.

(Variation)

Hereinafter, a variation of the node and the control method according to the embodiment described above will be described.

Node 110 according to the present variation will be described with reference to FIG. 7.

As shown in FIG. 7, node 110 according to the present variation includes short-range communicator 111 and controller 112. Node 110 corresponds to one of nodes 100a and the like according to the embodiment described above.

Short-range communicator 111 receives, from one of a plurality of nodes that belong to blockchain system 1 that is different from node 110, the identification information of the node through short-range wireless communication. Short-range communicator 111 corresponds to short-range communicator 101 according to the embodiment described above.

Controller 112 generates a block that includes transaction data selected from the transaction pool of node 110, the identification information of the node that is different from node 110, and the identification information of node 110. Also, controller 112 executes storing processing of storing the generated block in the blockchain held by the plurality of nodes. Controller 112 corresponds to client unit 103 according to the embodiment described above.

As a result of node 110 having the above-described configuration, variation in the amount of processing between devices in the distributed ledger system can be suppressed.

Next, a control method according to the present variation will be described.

As shown in FIG. 8, in the control method according to the present variation, in step S1, node 110 receives, from the node that is different from node 110, the identification information thereof through short-range wireless communication.

In step S2, node 110 generates a block that includes transaction data selected from the transaction pool of node 110, the identification information of the node that is different from node 110, and the identification information of node 110.

In step S3, node 110 executes the storing processing of storing the generated block in the blockchain held by the plurality of nodes.

As a result of node 110 performing the control method described above, it is possible to suppress variation in the amount of processing between devices in the distributed ledger system.

(Other Variations)

The present invention has been described based on the embodiments given above. However, the present invention is not limited to the embodiments given above. The present invention encompasses the following cases.

(1) In Embodiment 1, whether to authenticate a new block is determined by using the frequency of appearance of a pair of nodes that generated the new block relative to all of the authenticated blocks stored in the blockchain, but whether to authenticate a new block may be determined by using other criterion values. For example, whether to authenticate a new block may be determined by using the frequency of appearance of a pair of nodes that generated the new block out of N most recent blocks.

(2) In Embodiment 1, whether to authenticate a new block is determined by using the frequency of appearance of a pair of nodes involved in the generation of the new block, but whether to authenticate a new block may be determined by using the total number of all or some of pass-by events that occurred between nodes that constitute blockchain system 1. For example, a new block may be authenticated when the N-th pass-by event occurs on the blockchain.

(3) In Embodiment 1, whether to authenticate a new block is determined by using the frequency of appearance of a pair of nodes involved in the generation of the new block, but whether to authenticate a new block may be determined by using the frequency of appearance of one of the pair of nodes.

(4) In the embodiments described above, whether to authenticate a new block is determined by using the frequency of appearance of a pair of nodes involved in the generation of the new block, but whether to authenticate a new block may be determined by using the time at which the block was generated. For example, the difficulty may be reduced as the block generation time at which the immediately preceding block was generated is older. Alternatively, the block generation time at which the immediately preceding block was generated by the pair of nodes involved in the generation of the new block may be used.

(5) In the processing of sharing a block according to Embodiment 1, a method is shown in which the block is sequentially transmitted, but the block may be transmitted in parallel.

(6) In Embodiment 2, a block is selected from the blocks generated by two nodes that have passed by each other based on the value of rewards, but the selection may be performed based on the block generation time (for example, a block generated earlier may be selected).

(7) In the embodiments described above, the transaction data to be included in a block to be generated is selected based on the fee, but other criteria may be used. For example, the processing cost such as a smart contract may be used. In this case, the processing load of transaction verification on the node can be reduced.

(8) Parameter $\alpha$ in the conditional expression (Expression 1) according to the embodiments given above has been described as a constant, but may be a computational variable. For example, the hash value of the previous block may be included as a factor. In this case, the connectivity of blocks can also be guaranteed based on the condition determination.

(9) Parameter $\beta$ in the conditional expression (Expression 2) according to the embodiments given above has been described as a constant, but may be a computational variable. For example, by setting the parameter to be inversely proportional to the difference between the current time and the block generation time at which the previous block was generated, even when the same pair of nodes establish pass-by communication, the probability of authenticating a block can be increased over time.

(10) In the embodiments described above, each device is specifically a computer system that includes a microprocessor, a ROM, a RAM, a hard disk unit, a display unit, a keyboard, a mouse, and the like. A computer program is recorded in the RAM or the hard disk unit. The functions of the device are implemented as a result of the microprocessor operating in accordance with the computer program. Here, the computer program is composed of a combination of a plurality of instruction codes that indicate instructions for the computer to implement predetermined functions.

(11) In the embodiments described above, some or all of the structural elements that constitute each device may be composed of a single system LSI (Large Scale Integration). The system LSI is a super multifunctional LSI manufactured by integrating a plurality of structural elements on a single chip, and is specifically a computer system that includes a microprocessor, a ROM, a RAM, and the like. A computer program is recorded in the RAM. The functions of the system LSI are implemented as a result of the microprocessor operating in accordance with the computer program.

Also, the structural elements that constitute each device may be individual single chips, or some or all of them may be configured into a single chip.

Also, a system LSI is used here, but the LSI may be called IC, LSI, super LSI, or ultra LSI according to the degree of integration. Also, implementation of an integrated circuit is not limited to an LSI, and may be implemented by a dedicated circuit or a general-purpose processor. It is also possible to use an FPGA (Field Programmable Gate Array) that can be programmed after LSI production or a reconfigurable processor that enables reconfiguration of the connection and setting of circuit cells in the LSI.

Furthermore, if a technique for implementing an integrated circuit that can replace LSIs appears by another technique resulting from the progress or derivation of semiconductor technology, the functional blocks may, of course, be integrated by using that technique. Application of biotechnology or the like is possible.

(12) Some or all of the structural elements that constitute each device described above may be composed of an IC card or a single module that can be attached and detached to and from the device. The IC card or the module is a computer system that includes a microprocessor, a ROM, a RAM, and the like. The IC card or the module may include the above-described super multifunctional LSI. The functions of the IC card or the module are implemented as a result of the microprocessor operating in accordance with a computer program. The IC card or the module may have tamper resistance.

(13) The present invention may be implemented as the method described above. Also, the present invention may be implemented as a computer program that causes a computer to implement the method, or a digital signal generated from the computer program.

Also, the present invention may be implemented by recording the computer program or the digital signal in computer-readable recording media such as, for example, a flexible disc, a hard disk, a CD-ROM, an MO, a DVD, a DVD-ROM, a DVD-RAM, a BD (Blu-ray (registered trademark) Disc), and a semiconductor memory. Also, the present invention may be implemented as the digital signal recorded in the recording media.

Also, the present invention may be implemented by transmitting the computer program or the digital signal via a telecommunication line, a wireless or wired communication line, a network as typified by the Internet, data broadcasting, and the like.

Also, the present invention may be implemented by a computer system that includes a microprocessor and a memory. In the memory, the above-described computer program may be recorded, and the microprocessor may operate in accordance with the computer program.

Also, the present invention may be implemented by another independent computer system by recording the program or the digital signal on the recording media to transmit the program or the digital signal, or by transmitting the program or the digital signal via a network or the like.

(14) The embodiments and the variations described above may be combined in any way.

Also, in each of the embodiments described above, the structural elements may be configured using dedicated hardware, or may be implemented by executing a software program suitable for the structural elements. The structural elements may be implemented by a program executor such as a CPU or a processor reading and executing a software program recorded in a recording medium such as a hard disk or a semiconductor memory. Here, software that implements the control device and the like according to the embodiments given above may be a program as described below.

That is, this program is a program for causing a computer to execute a control method executed by a first device among a plurality of devices that are included in a distributed ledger system, the plurality of devices holding a distributed ledger, the control method including: receiving, from a second device among the plurality of devices, second identification information of the second device through short-range wireless communication, the second device being different from the first device; generating a block that includes transaction data selected from a transaction pool of the first device, the second identification information, and first identification information of the first device; and executing storing processing of storing the block generated in the distributed ledger held by the plurality of devices.

Up to here, the control device and the like according to one or more aspects of the present invention have been described based on the embodiments. However, the present invention is not limited to the embodiment given above. Other embodiments obtained by making various modifications that can be conceived by a person having ordinary skill in the art to the above embodiments as well as embodiments constructed by combining structural elements of different embodiments without departing from the scope of the present invention are also included within the scope of the one or more aspects of the present invention.

[Industrial Applicability]

The present invention is applicable to a device that constitutes a distributed ledger system.

[Reference Signs List]

| | |
|---|---|
| 1 | blockchain system |
| 20 | block |
| 21 | transaction section |
| 22 | header section |
| 23 | signature section |
| 100a, 100b, 100c, 110 | node |
| 101, 111 | short-range communicator |
| 102 | encryption processor |
| 103 | client unit |
| 104 | storage |

| 105 | communicator |
| 107 | determiner |
| 112 | controller |
| 211, 212 | transaction data |
| 221 | hash value |
| 222 | block number |
| 223, 224 | identification information |
| 225 | creation date and time |
| 226 | parameter |
| 231, 232 | signature |
| N | network |

**Claims**

1. A control method executed by a first device among a plurality of devices that are included in a distributed ledger system, the plurality of devices holding a distributed ledger, the control method comprising:

   receiving, from a second device among the plurality of devices, second identification information of the second device through short-range wireless communication, the second device being different from the first device;
   generating a block that includes transaction data selected from a transaction pool of the first device, the second identification information, and first identification information of the first device; and
   executing storing processing of storing the block generated in the distributed ledger held by the plurality of devices.

2. The control method according to claim 1,
   wherein, in the storing processing, the block generated is stored in the distributed ledger at a higher probability as a total number of blocks generated based on near-field wireless communication established between the first device and the second device out of blocks stored in the distributed ledger is smaller.

3. The control method according to claim 1 or 2,
   wherein, in the storing processing, the block generated is stored in the distributed ledger when the total number of blocks generated based on near-field wireless communication established between the first device and the second device out of blocks stored in the distributed ledger is less than or equal to a predetermined number.

4. The control method according to claim 1 or 2,
   wherein, in the storing processing, the block generated is stored in the distributed ledger at a higher probability as a total number of blocks generated based on near-field wireless communication established between the first device and the second device out of a predetermined number of most recent blocks of blocks stored in the distributed ledger is smaller.

5. The control method according to claim 1 or 4,
   wherein, in the storing processing, the block generated is stored in the distributed ledger when a total number of blocks generated based on near-field wireless communication established between the first device and the second device out of a predetermined number of most recent blocks of blocks stored in the distributed ledger is less than or equal to a predetermined number.

6. The control method according to any one of claims 1 to 5,
   wherein, in the storing processing, the block generated is prohibited from being stored in the distributed ledger when a most recent one of blocks stored in the distributed ledger is a block that was generated based on near-field wireless communication established between the first device and the second device.

7. The control method according to any one of claims 1 to 6,

   wherein, in the storing processing,
   when the block generated is to be stored in the distributed ledger, the block generated is transmitted to the plurality of devices to be stored in the distributed ledger held by the plurality of devices, and
   when the block generated is not to be stored in the distributed ledger, the block generated is not transmitted to the plurality of devices.

8. The control method according to any one of claims 1 to 7,

   wherein, in the storing processing,
   when the block generated is to be stored in the distributed ledger,
   the block generated is transmitted to the second device to cause the second device to add a digital signature of the second device to the block transmitted,
   the block to which the digital signature of the second device has been added is received,
   a digital signature of the first device is added to the block received, and
   the block to which the digital signatures of the first device and the second device have been added is stored in the distributed ledger held by the plurality of devices.

9. The control method according to any one of claims 1 to 8,

   wherein the second identification information includes authentication information generated by using a secret key of the second device, and
   when the second identification information is received,
   the authentication information included in the second identification information is verified by using a public key of the second device, and the block is generated only when the authentication information included in the second identification information is successfully verified.

10. A control device that is a first device among a plurality of devices that are included in a distributed ledger system, the plurality of devices holding a distributed ledger, the control device comprising:

    a short-range communicator that receives, from a second device among the plurality of devices that is different from the first device, second identification information of the second device through short-range wireless communication; and
    a controller:

    (a) generates a block that includes transaction data selected from a transaction pool of the first device, the second identification information, and first identification information of the first device; and
    (b) executes storing processing of storing the block generated in the distributed ledger held by the plurality of devices.

11. A program for causing a computer to execute the control method according to any one of claims 1 to 9.

# FIG. 1

# FIG. 2

# FIG. 3

20

**Block**

21

**Transaction section**

211

Transaction data

212

Transaction data

.
.
.

22

**Header section**

| 221 | 222 |
|---|---|
| Hash value | Block number |

| 223 | 224 |
|---|---|
| Identification information | Identification information |

| 225 | 226 |
|---|---|
| Creation date and time | Parameter |

23

**Signature section**

231

Signature

232

Signature

## FIG. 4

| Node 100a | Node 100b | Node 100c |
|---|---|---|

**S101** — Establish short-range wireless communication ⟷ **S101** — Establish short-range wireless communication

**S102** — Share connection information ⟷ **S102** — Share connection information

**S103** — No ⟵ Connection partner is authentic node?

**S103** — Connection partner is authentic node? → No → End

Yes — **S104** — Generate block

Yes

**S105** — No ⟵ Authenticate generated block?

Yes

**S106** — Transmit block → **S107** — Authenticate received block? → No → End

End

Yes — **S108** — Add signature to block

**S109** — Transmit block ⟵

**S110** — Add signature to block

**S111** — Store block in blockchain

**S200** — Share block in blockchain system

# FIG. 5

S200

| Node 100a | Node 100b | Node 100c |
|---|---|---|

S201

Transmit block

S202

Authenticate received block? — No

Yes — S203

Block contains unauthorized transaction data? — Yes

No — S204

End

Store block in blockchain

S205

Transmit block

S206

Authenticate received block? — No

Yes — S207

Block contains unauthorized transaction data? — Yes

No — S208

End

Store block in blockchain

FIG. 6

| Node 100a | Node 100b | Node 100c |
|---|---|---|

**S301** Establish short-range wireless communication ↔ **S301** Establish short-range wireless communication

**S302** Share connection information ↔ **S302** Share connection information

**S303** No — Connection partner is authentic node? — Yes

**S303** Connection partner is authentic node? — No — Yes

**S304** Generate block A

**S304** Generate block B

**S305** No — Authenticate generated block A? — Yes

**S305** Authenticate generated block B? — No — Yes

**S306** Transmit block A →

**S306** Transmit block B ←

End

End

**S307** Determine block to be stored

**S307** Determine block to be stored

(When it is determined that block A is to be stored)

**S308** Add signature to block A

**S309** Transmit block A

**S310** Add signature to block A

**S311** Store block A in blockchain

**S200** Share block A in blockchain system

# FIG. 7

110
Node

111    112

Short-range communicator | Controller

# FIG. 8

Start

Receive identification information through short-range wireless communication    S1

Generate block    S2

Execute storing processing    S3

End

**INTERNATIONAL SEARCH REPORT**

| International application No. |
| --- |
| PCT/JP2021/015890 |

**A. CLASSIFICATION OF SUBJECT MATTER**
H04L 9/32(2006.01)i
FI: H04L9/00 675Z

According to International Patent Classification (IPC) or to both national classification and IPC

**B. FIELDS SEARCHED**

Minimum documentation searched (classification system followed by classification symbols)
H04L9/00, H04L 12/00, G06Q20/00

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus/JMEDPlus/JST7580 (JDreamIII); IEEE Xplore blockchain, short range communication, device identifier, consensus

**C. DOCUMENTS CONSIDERED TO BE RELEVANT**

| Category* | Citation of document, with indication, where appropriate, of the relevant passages | Relevant to claim No. |
| --- | --- | --- |
| A | US 2018/0276663 A1 (MASTERCARD INTERNATIONAL INCORPORATED) 27 September 2018 (2018-09-27) paragraphs [0015]-[0028] | 1-11 |
| A | JP 2018-525729 A (FMR LLC) 06 September 2018 (2018-09-06) paragraphs [0078]-[0082], [0109] | 1-11 |
| A | US 2017/0075941 A1 (KEIR, FINLOW-BATES) 16 March 2017 (2017-03-16) paragraphs [0045]-[0110] | 1-11 |

☐ Further documents are listed in the continuation of Box C.      ☒ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 30 June 2021 (30.06.2021) | 13 July 2021 (13.07.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

| International application No. |
|---|
| PCT/JP2021/015890 |

| Patent Documents referred in the Report | Publication Date | Patent Family | Publication Date |
|---|---|---|---|
| US 2018/0276663 A1 | 27 Sep. 2018 | JP 2020-516121 A<br>paragraphs [0012]-[0025]<br>WO 2018/175058 A1<br>EP 3602448 A1<br>KR 10-2019-0122815 A<br>CN 110603554 A | |
| JP 2018-525729 A | 06 Sep. 2018 | US 2017/0017936 A1<br>paragraphs [0078]-[0081], [0108]<br>WO 2017/011601 A1<br>EP 3323080 A1<br>CA 2992458 A<br>CN 108027867 A | |
| US 2017/0075941 A1 | 16 Mar. 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SATOSHI NAKAMOTO.** *Bitcoin: A Peer-to-Peer Electronic Cash System,* 2008, https://bitcoin.org/bitcoin.pdf

- **SUNNY KING ; SCOTT NADAL.** *PP Coin: Peer-to-Peer Crypto-Currency with Proof-of-Stake,* 2012, https://decred.org/research/king2012.pdf